# EUROPEAN PATENT APPLICATION

(11) **EP 1 596 009 A1**
(43) Date of publication of application: **16.11.2005**
(21) Application number: 04011248.4
(22) Date of filing: 12.05.2004
(51) Int. Cl.: E02B 3/26

(54) **A novel protective work for vessel impact on bridge piers**

(71) Applicant: Hou Yincheng, 41320 Göteborg (SE)
(72) Inventor: Hou Yincheng, 41320 Göteborg (SE)

(57) **Abstract**

A novel protective work for vessel impact on bridge piers is created with its special structures and functions as shown in the enclosed Fig. 2. A platform 3 and an inner wall 4 is added on the footing(s) 1 and between columns 2 of a protected pier. On the 3 around the 4, a protecting ring 7 is erected with meters allowable movement 7₀₂. Between 3, 4, 7, thousands cubic meters of energy dissipated block 10, which fits the 7₀₂ within its elastic compression ratio and consists of waste tire, central spring, corner springs and foam material, are densely filled in. On the 4 and 7, several steel cantilever girders 5, which consists of anchored part and moveable part, and concrete cantilever girders 6 are anchored to muster more 10 for dissipating the vessel impact energy. Between 4 and 7, several energy dissipated cables 9, which fits the 7₀₂ within its elastic tension ratio and consists of strands, spring, fixed and tensioned sockets, are arranged to help 10 and to return 7 to normal after a serious vessel impact. On the outer surface of 7 a bumper system 8 is erected and extends into water with required depth of vessel's head-on impact. When cornes a collision between vessel and pier, thousands cubic meters of 10, several groups of 9 and moving friction between 7 and 3 are jointly working to dissipate the main part of vessel impact kanetic energy, so that the injury both for pier and vessel will become lighter than usual. The 10 is possible to become a new kind of industrial products, which are good for protecting the abandoned waste tires environment pollution

## Description

The invention relates to the field of protective works for vessel impact on bridge piers.

Large-scale vessel impacts happen usually on the piers in maritime areas or tided rivers. The invention is exclusively created for these piers.

At present, artificial island is an effective protect work in case of piers in shallow water ["Protection of marine structures by artificial island", Bo Cerup Simonsen and Niels Erik Ottesen Hansen, proceedings "Ship Collision Analysis" p. 201, COWI, Lyngby, Denmark, 1998]. However, sometimes for the environment or navigation requirements the large space occupied artificial island is not allowable. In case of piers in deep water an experienced but imperfect protect work, sacrificial pier (dolphin), has to be used ["Design aspects for ship-bridge collisions for selected recent major bridge projects", Aksel G. Frandsen, proceedings "Ship Collision Analysis" p. 23, COWI, Lyngby, Denmark, 1998.], ["Bridge Protection of the Rosario-Victoria Bridge, Argentina", Reiner Saul, Kart Humpf and Armin Patsch, journal "Structural Engineering International" p. 227, IABSE, November 2003]. The sacrificial pier protection structure has the following problems: 1) In collision the sacrificial pier and the vessel bottom injure seriously. 2) Protection area is limited. 3) Aberrant vessel driving into the area between bridge pier and sacrificial pier survives difficultly. 4) Repairing and reconstruction is difficult after a serious collision. This novel protective work is going to solve these problems.

### 1. Principle of the novel protective work

When a large-scale vessel impacts a bridge pier its huge kinetic energy transfers to the pier. If a high efficient energy absorber can prolong the time and distance of energy transmission course, the impacting force becomes smaller. Simply processed waste tires have been directly used for protecting vehicle impacts as an energy absorber with efficient results. These successful experiences will be used as a main measure of this novel protective work. Especially, along with the amount of car rapidly increasing more and more waste tires are abandoned which even becomes a serious pollution source. However, the kinetic energy in vessel impacts is tremendously larger than in vehicle impacts while the sizes of protective work for vessel impact on bridge piers can not be too large. Therefore, the simply processed waste tires don't meet these requirements and in this novel protective work the following problems will be reasonably solved:
1) How to create a densely-arranged and effective energy absorber element based on the waste tire?
2) Within a limited space how to arrange and jointly muster as many energy absorber elements as possible for dissipating the vessel impact energy?
3) During vessel impacting how to keep all the structures in elastic working condition, so that repairing becomes simple afterwards?
4) After a serious vessel impacting how to return the protective work to normal?
5) How to make the protective work not only for new designed but also for original designed or completed piers?

### 2. General layout of the novel protective structure

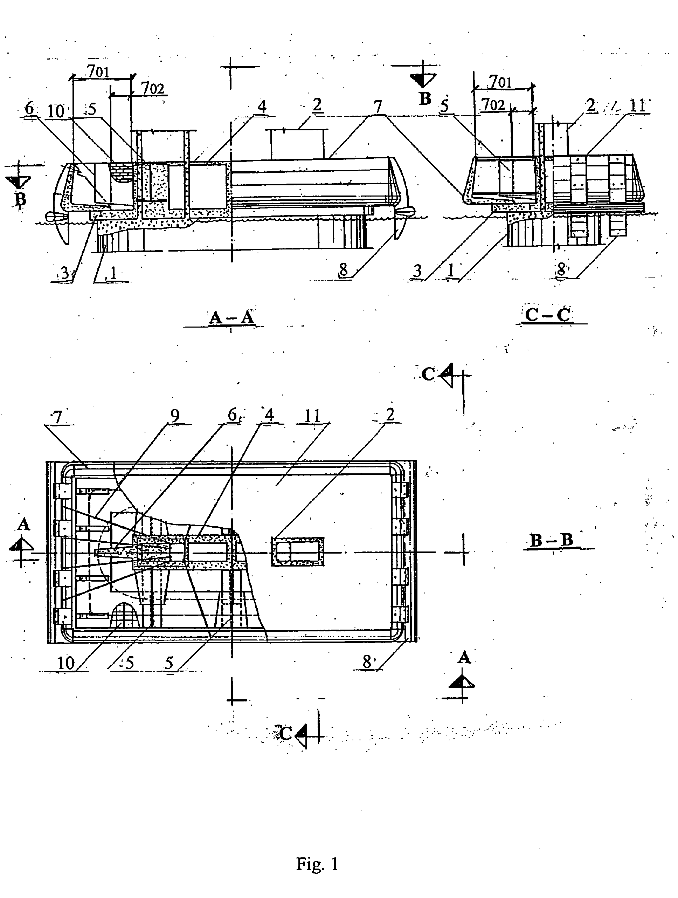

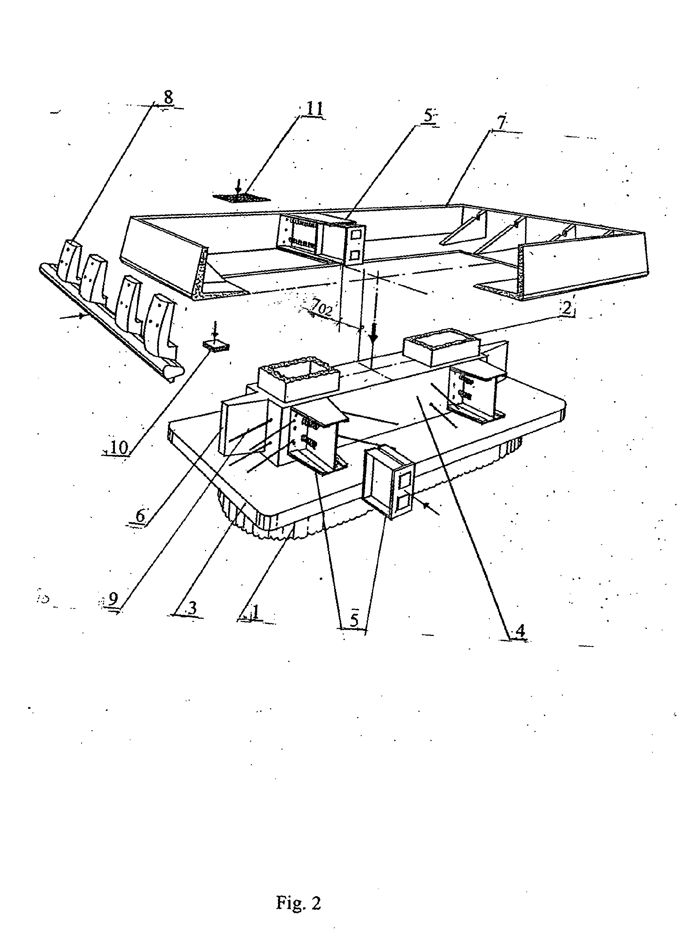

Fig. 1 and 2 illustrate the general layout of the protective structure which consists of the following parts:
1) Platform
   On new designed, original designed or completed footing(s) 1 of protected pier P, a new platform 3 is added and fixed with 1, if the area of footing 1 is not big enough for the arrangement of protecting ring 7.
2) Inner wall
   If new designed, original designed or completed columns 2 of protected pier are not connected together with a wall, a new inner wall 4 is added and fixed with columns 2 and platform 3.
3) Steel cantilever girder
   Along bridge axis four or more steel cantilever girders 5, which consist of anchored girder and movable girder, are anchored to the inner wall 4.
4) Concrete cantilever girder
   Along navigation direction two concrete cantilever girders 6 are anchored to the inner wall 4. The gap between bottom of steel/concrete cantilever girders 5/6 and platform 3 should fit the movement of protecting ring 7.
5) Protecting ring
   On the outer part of platform 3, a protecting ring 7 is erected to keep two designed distances 7₀₁ and 7₀₂ with inner wall 4. The protecting ring 7 can be prestressed concrete structure or/and steel-concrete composite structure which is prefabricated on land with several elements then assembled on the platform 3. During the elements assembling a layer of asphalt is paved between protecting ring 7 and platform 3. Two or more steel cantilever girders 5 are anchored to the protecting ring 7.
6) Bumper system
   On the outer surfaces of protecting ring 7 towards the navigation direction, two bumper systems 8 are erected which extend into water with required depth of vessel's head-on impact.
7) Energy dissipated cable
   Twelve or more groups of energy dissipated cables 9 are erected to connect protecting ring 7 and inner wall 4.
8) Energy dissipated block
   All the space inside the protecting ring 7 should be densely filled by energy dissipated blocks 10.
9) Isolating asphalt sand
   On the top of energy consumed blocks 9, protecting ring 7 and inner wall 4 a layer of isolating asphalt sand 11 is paved.

### 3. Structure of energy dissipated block 10 and its tests

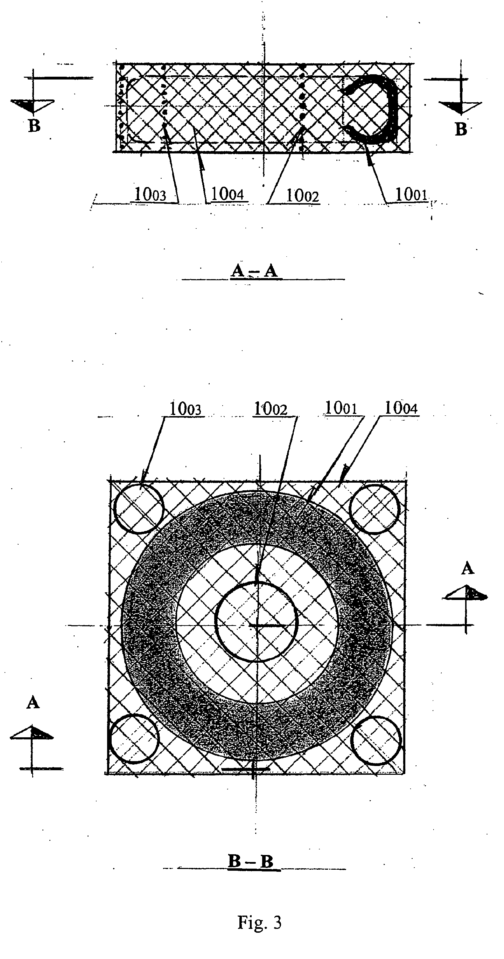

Fig. 3 illustrate the structure of the regular hexahedral energy dissipated block 10 which consists of waste tire 10₀₁, central spring 10₀₂, corner springs 10₀₃ and foam material 10₀₄. Demands of energy dissipated block 10 are: 1) Its elastic compression ratio is bigger than 7₀₂/7₀₁, so that it can still work after a serious vessel impacting. 2) Its elastic modulus should meet the design range. 3) Its shape and size is easy for densely filled construction inside the protecting ring 7. 4) It can endure the salt water corrosion if salt water leaks eventually into the protecting ring 7. In order to get to know the possible elastic compression ratios, elastic modulus and damping factors of energy dissipated block 10 a series of tests should be carried out.

### 4. Structures of steel cantilever girder

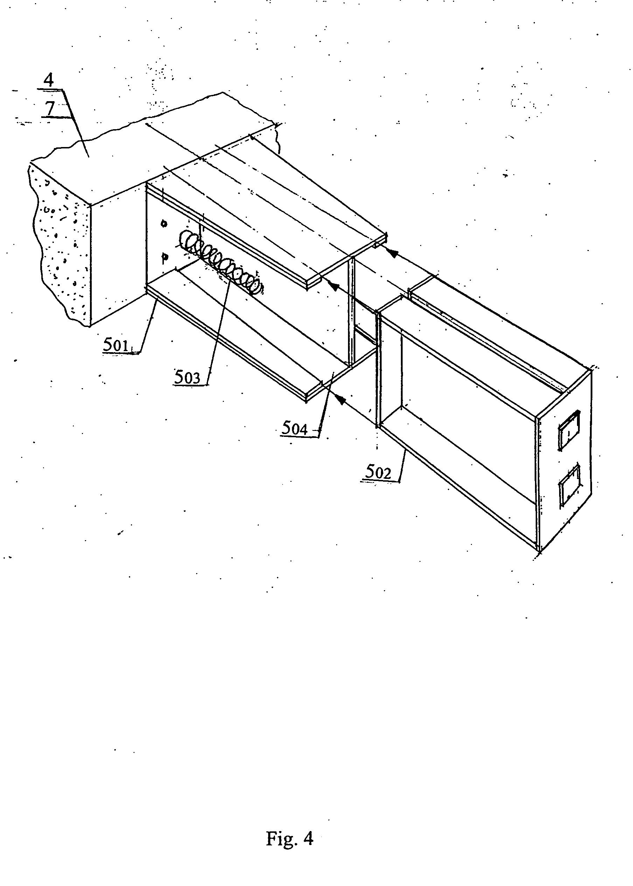

Fig. 4 illustrates the structure of the steel cantilever girder 5 anchored to inner wall 4 or to protecting ring 7. The steel cantilever girder 5 consists of anchored girder 5₀₁, movable girder 5₀₂, spring 5₀₃ and guiding trough 5₀₄. In case of anchored to inner wall 4 the gap between bottom flange plate of anchored girder 5₀₁ and platform 3 should fit the movement of protecting ring 7. In case of anchored to protecting ring 7, the bottom flange plate of anchored girder 5₀₁ should be fixed to the protecting ring 7. The steel cantilever girder 5 should be able to endure the salt water corrosion if salt water leaks eventually into the protecting ring 7.

### 5. Structure of energy dissipated cable 9

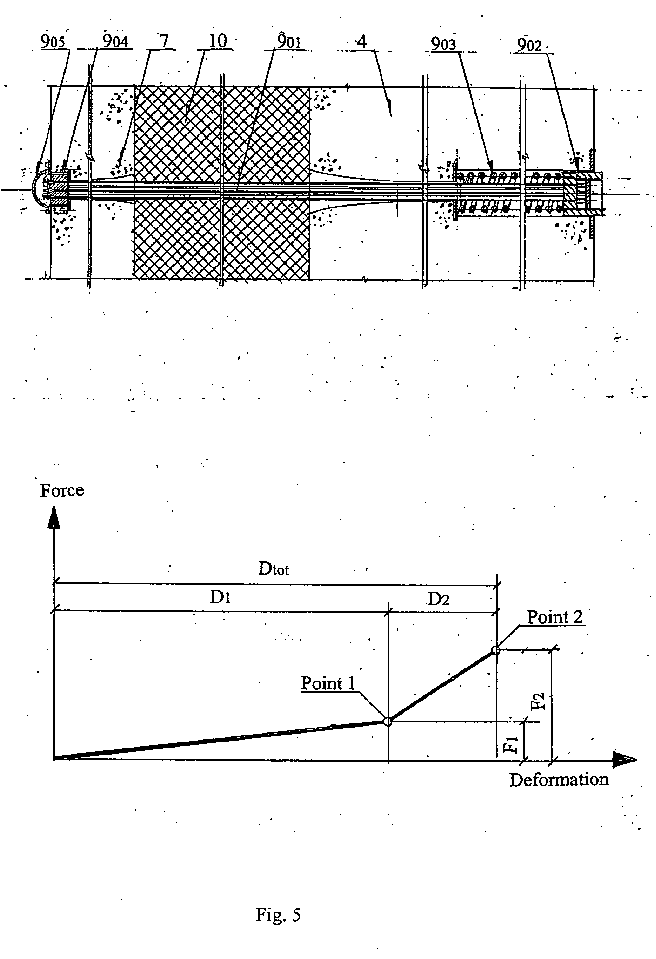

Fig. 5 illustrate the structure of the energy dissipated cable 9 which consists of strands 9₀₁, adjustable anchorage socket 9₀₂, spring 9₀₃, fixed anchorage socket 9₀₄ and its isolating cover 9₀₅. Demands of energy dissipated cable 10 are: 1) Its elastic stretch capacity can meet the requirement of the movement 7₀₂, so that it can still work after a serious vessel impacting. 2) Its strength should meet the design range: 3) It can be jacked inside inner wall 4 with necessary force to return the protective work to normal. 4) It can endure the salt water corrosion if salt water leaks eventually into the protecting ring 7. Its conceptual tension-deformation diagram is illustrated in Fig. 5 as well. "Point 1" expresses the situation of spring 9₀₂ arriving to its compression deformation limit with cable force F₁ and cable deformation D₁. "Point 2" expresses the situation of protecting ring 7 arriving to its limited movement 7₀₂ with cable force F₂ and cable deformation Dₜₒₜ.

### 6. Explanations for the functions of the novel protective structure

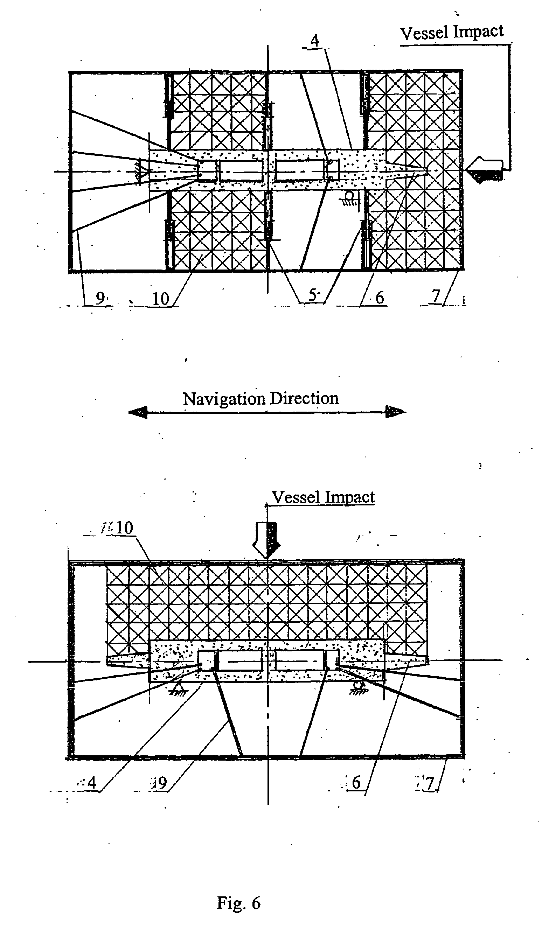

When a vessel impacts the novel protective structure along and transversely to navigation direction respectively, the actions can be simply illustrated in Fig. 6. It is clear that energy dissipated blocks 10 play a very important role in impact energy dissipating. According to the conceptual designs of the novel protective structure on six lanes bridge piers the rough data are showed in Table 1.

**Table 1**

| | Long span cable-stayed and suspension bridges | 100m span bridges |
|---|---|---|
| Total volume of energy dissipated blocks 10 | 30 000―60 000 m³ | 4000 m³ |
| Block volume works along navigation direction | 15 000―30 000 m³ | 2000 m³ |
| Block volume works transversely to navigation direction | 13 000―26 000 m³ | 1800 m³ |
| Bloc compressed area along navigation direction | 500―1300 m² | 250 m² |
| Bloc compressed area transversely to navigation direction | 400―1000 m² | 200m² |
| Permit movement 7₀₂ of protection ring | 5―6 m | 3m |

Steel and concrete cantilever girders 5 and 6 have the following functions: 1) They facilitate more energy consumed blocks 10 to work. 2) Concrete cantilever girder 6 can increase torsion capacity of protection ring 7 when comes an underwater head-on vessel impact to bumper systems 8. 3) Steel cantilever girders 5 can increase capacity of protection ring 7 when comes a vessel broadside striking from bridge axis direction. Consequently, tolerance of gaps between protection ring 7 and all the cantilever girders 5 and 6 should be as small as possible.

Energy dissipated cables 9 have two functions: 1) They help energy dissipated block 10 to dissipate vessel impact energy. 2) After a serious vessel impacting they can be jacked inside inner wall 4 to return the protection ring 7 to normal. Consequently, what needs to rebuild after a serious vessel impacting is isolating asphalt sand 11 only.

Moving friction between protection ring 7 and platform 3 can dissipate certain vessel impact energy too. Therefore, keeping a suitable weight for protection ring 7 is necessary.

### 7. Analysis model

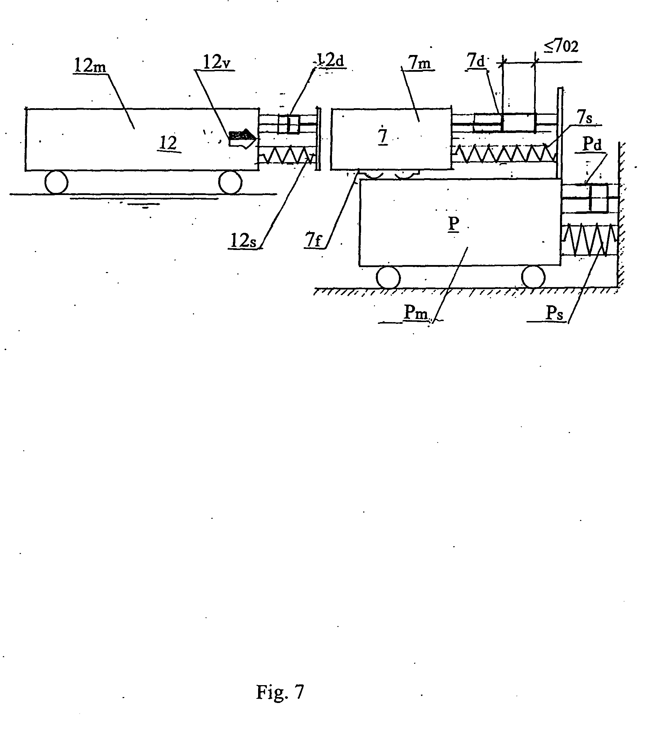

Fig. 7 illustrates the analysis model of the impacting process:
1) Vessel 12 with its mass 12ₘ and velocity 12ᵥ impacts to protection ring 7 through its spring factor 12ₛ and damping factor 12_{d}.
2) Protection ring 7 with its mass 7ₘ lies on and connects to pier P through its spring factor 7ₛ, damping factor 7_{d} friction factor 7_{f} and limited movement 7₀₂.
3) Pier P with its mass Pₘ stands on and connects to the earth through its spring factor Pₛ and damping factor P_{d}.
Based on the analysis model all the displacements, velocities, accelerations and forces can be calculated.

### 8. Possibility of energy dissipated blocks becoming industrial products

Once the novel vessel impact protective works are used on bridge projects, thousands cubic meters of energy dissipated block 10 will be submitted group by group. Consequently, the energy dissipated blocks are possible to become a new kind of industrial products. Making a comparison between the simply processed waste tires and the energy dissipated block 10, the later one has much higher efficiency and is possible to be used for protecting vehicle impacts too. Furthermore, the new industrial products are good for protecting the abandoned waste tires environment pollution.

## Claims

1. A protective work for vessel impact on bridge pier P, which has its footing(s) 1 and columns 2, consists of platform 3, inner wall 4, steel cantilever girders 5, concrete cantilever girders 6, protecting ring 7, bumper system 8, energy dissipated cables 9, energy dissipated blocks 10, and isolating asphalt sand 11.

2. A platform 3 as clamed in Claim 1, **characterized in that** is added and fixed with the footing(s) 1.

3. An inner wall 4 as clamed in Claim 1, **characterized in that** is added and fixed with the columns 2 and platform 3.

4. A protecting ring 7 as clamed in Claim 1, **characterized in that** is erected on platform 3 and keeps two designed distances 7₀₁ and 7₀₂ with inner wall 4.

5. A steel cantilever girder 5 as clamed in Claim 1, **characterized in that** is anchored with inner wall 4 or protecting ring 7. The steel cantilever girder 5 consists of anchored girder 5₀₁, movable girder 5₀₂, spring 5₀₃ and guiding trough 5₀₄.

6. A concrete cantilever girder 6 as clamed in Claim 1, **characterized in that** is anchored with inner wall 4.

7. An energy dissipated block 10 as clamed in Claim 1, **characterized in that** consists of waste tire 10₀₁, central spring 10₀₂, corner springs 10₀₃ and foam material 10₀₄.

8. An energy dissipated cable 9 as clamed in Claim 1, **characterized in that** consists of strands 9₀₁, adjustable anchorage socket 9₀₂, spring 9₀₃, fixed anchorage socket 9₀₄ and its isolating cover 9₀₅.

9. A bumper system 8 as clamed in Claim 1, **characterized in that** is erected on the outer surfaces of protecting ring 7 and extends into water with required depth of vessel's head-on impact.

10. A layer of isolating asphalt sand 11 as clamed in Claim 1, **characterized in that** is paved on the top of energy consumed blocks 9, protecting ring 7 and inner wall 4.
